# EUROPEAN PATENT SPECIFICATION

(11) **EP 2 333 419 B1**
(45) Date of publication and mention of the grant of the patent: **21.12.2016**
(21) Application number: 10753294.7
(22) Date of filing: 17.03.2010
(51) Int. Cl.: F24C 7/02, A47J 27/00, H05B 6/64

(54) **COOKING DEVICE AND HEATING DEVICE PROVIDED WITH THE SAME**
KOCHVORRICHTUNG UND ERHITZUNGSVORRICHTUNG DAMIT
DISPOSITIF DE CUISSON ET DISPOSITIF DE CHAUFFAGE LE COMPORTANT

(30) Priority: 18.03.2009 JP 2009065761
(43) Date of publication of application: 15.06.2011
(73) Proprietor: Panasonic Corporation, Kadoma-shi Osaka 571-8501 (JP)
(72) Inventor: AKASHI, Takayuki, Chuo-ku, Osaka-shi, Osaka 540-6207 (JP); KAWAZOE, Koichiro, Chuo-ku, Osaka-shi, Osaka 540-6207 (JP); FUKUDA, Hiroshi, Chuo-ku, Osaka-shi, Osaka 540-6207 (JP); KAWAI, Hiroshi, Chuo-ku, Osaka-shi, Osaka 540-6207 (JP)
(74) Representative: Schwabe - Sandmair - Marx
(86) International application number: PCT/JP2010/001895
(87) International publication number: WO 2010/106797

(56) References cited:
- GB-A- 638 855
- GB-A- 2 423 693
- JP-U- 3 138 067
- JP-U- 3 138 067
- JP-U- S6 419 817

## Description

### TECHNICAL FIELD

The present invention relates to a cooking device according to the preamble potion of claim 1 for use in a heating device, and more particularly to a grill pan for cooking food by making use of the heat generated by irradiation of microwaves using a high frequency heating device as defined in claim 5.

### BACKGROUND ART

In recent years, high-frequency heating devices, such as a microwave oven, have had a cooking function using a cooking device, i.e. a so-called grill pan, disposed in the high-frequency heating device, in addition to a microwave heating function for heating food by radiating microwaves directly to the food. Hereinafter, the former function is referred to as a grill pan cooking function.

This grill pan cooking is the following cooking method. A cooking pan has a heating element applied to the back surface for generating heat by absorbing microwaves. The cooking pan is disposed in a heating chamber, and food is placed on the cooking pan. The heat generated from the heating element by irradiation of microwaves cooks the food. For such grill pan cooking, when the food is cooked by the contact with the grill pan that generates heat with the microwaves, grease oozes from the food, which needs to be discharged from between the food and the grill pan. Hereinafter, this action is referred to as degreasing.

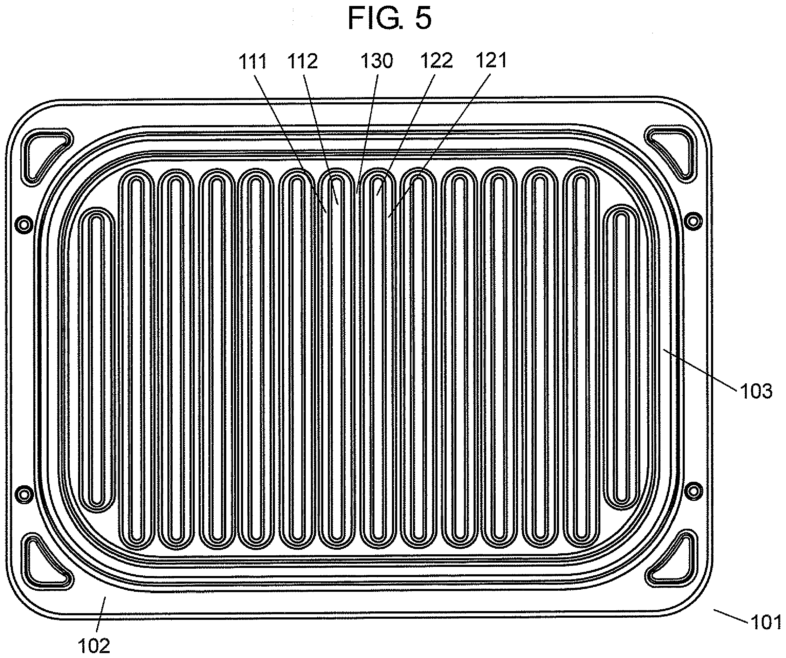

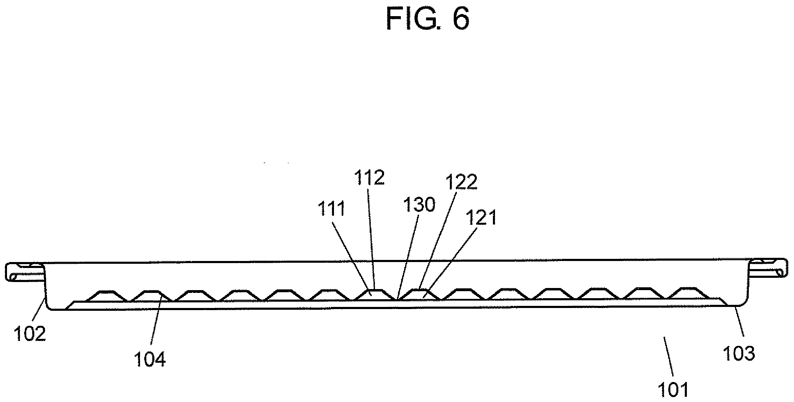

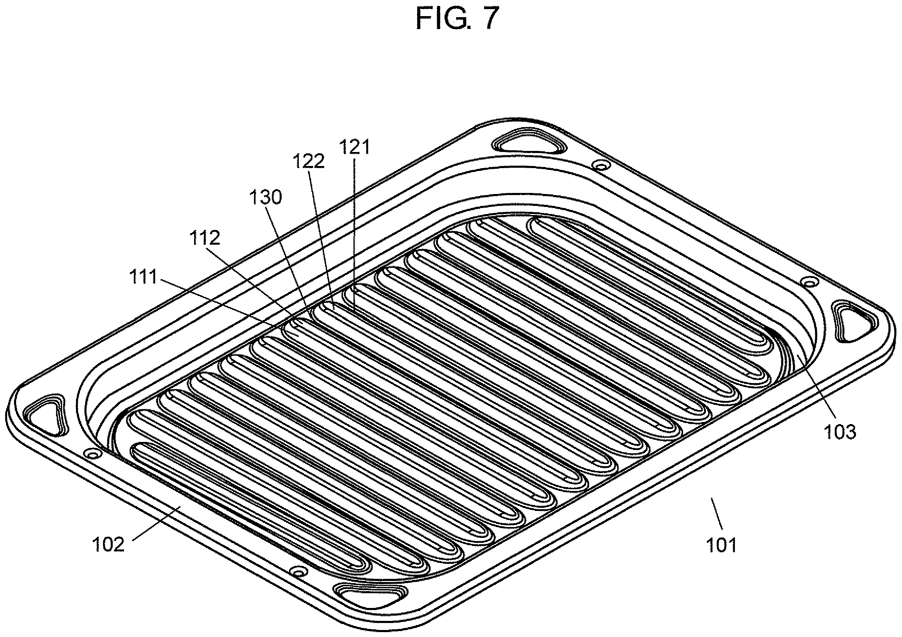

Conventionally, a grill pan configured as shown in Figs. 5 through 7 is available for degreasing (see Patent Literature 1, for example). The above conventional technique is described with reference to the accompanying drawings. Figs. 5 through 7 show a top view, a side sectional view, and a perspective view of the conventional grill pan, respectively. As shown in Figs. 5 through 7, conventional grill pan 101 has an overall substantially rectangular shape as viewed from the top. Edge 102 in a flange shape is formed on the periphery of grill pan 101. Peripheral channel 103 is formed inside edge 102.

A plurality of banks 111, each in the shape of an elongate, thin, rectangular parallelepiped having rounded corners, is arranged inside peripheral channel 103. Between two banks adjacent to each other, groove 130 is formed. Each bank has a length equal to that from one side to the opposed side of peripheral channel 103. Thus, the inside part of peripheral channel 103 has a corrugated shape where banks and grooves are arranged alternately. The bottom of peripheral channel 103 is lower than the bottom of groove 130.

Hereinafter, only banks 111 and 121 and groove 130 are focused. Here, the lengthwise direction of the banks is defined as a longitudinal direction; the direction perpendicular to the lengthwise direction of the banks is defined as a lateral direction.

The top surfaces of banks 111 and 121 have respective placement surfaces 112 and 122 each in a substantially planar shape on which food is to be placed. Heating element 104, i.e. an electromagnetic wave absorption material predominantly composed of ferrite, is applied to the back surfaces of banks 111 and 121, and groove 130.

When grill pan 101 configured as above is disposed in the heating chamber of a high-frequency heating device and microwaves are radiated to the back surface of grill pan 101, heating element 104 generates heat and the heat conducted from placement surfaces 112 and 122 can cook the food. For conventional grill pan 101, the grease oozing from the food in cooking passes through groove 130 and accumulates in peripheral channel 103. Here, in order to improve cooking efficiency and uneven roasting, it is preferable to sufficiently increase the lateral length, i.e. the lateral width, of each placement surface so as to reduce the space between adjacent two banks, i.e. the lateral width of the groove, to some extent (see Patent Literature 2, for example).

Typically, a grill pan is formed by pressing a metal plate. For this reason, if the groove is formed deeper (e.g. with a depth of 5 mm) for efficient degreasing, the lateral width of the groove needs to be increased. As a result, the area of the placement surfaces to be in contact with food is decreased. Thus, in the case where food needs to be cooked with a sufficient roast color, part of the food on the groove is heated insufficiently and this makes it difficult to give a desired roast color to the food.

Conversely, if the lateral width of the groove is formed smaller, the groove is shallower. Thus, soft food falls in the groove and makes contact with the groove. At this time, if the food contains much fat, the grease oozing from the food in cooking is accumulated between the food and the groove by surface tension and inhibits heat conduction. Thus, a desired roast color cannot be given to the food.

In other words, the conventional grill pan cannot address the following two problems at the same time: giving a desired roast color to the food; and efficient degreasing. The present invention addresses the above two problems at the same time. The present invention provides a grill pan that has larger placement surfaces to be in contact with food and performs efficient degreasing by varying the depth of the grooves,
and enhances the performance of grill pan cooking in a high-frequency heating device.

### [Citation List]

### [Patent Literature]

[PTL1]
   Japanese Patent Unexamined Publication No. 2007-225186
[PTL2]
   Japanese Patent Unexamined Publication No. 2006-52932
A cooking device according to the preamble portion of claim 1 is disclosed in JP S64 19817 U.

### SUMMARY OF THE INVENTION

In order to address the above problems, a cooking device of the present invention is a cooking device for cooking food placed thereon, and includes the following elements set forth in claim 1.

### BRIEF DESCRIPTION OF DRAWINGS

Fig. 1 is a top view of a cooking device in accordance with a first exemplary embodiment of the present invention.
Fig. 2A is a side sectional view of the cooking device in accordance with
   to be continued on originally filed page 5 the first exemplary embodiment.
Fig. 2B is a side sectional view of the cooking device in accordance with the first exemplary embodiment.
Fig. 3 is a perspective view of the cooking device in accordance with the first exemplary embodiment.
Fig. 4 is a general view of a heating device including the cooking device in accordance with the first exemplary embodiment.
Fig. 5 is a top view of a conventional cooking device.
Fig. 6 is a side sectional view of the conventional cooking device.
Fig. 7 is a perspective view of the conventional cooking device.

### DETAILED DESCRIPTION OF PREFERRED EMBODIMENT

A first aspect in accordance with the present invention provides a cooking device for cooking food placed thereon includes the following elements:
a plurality of banks arranged in the lateral direction, each of the banks having a placement surface for supporting the food being placed; and
a groove formed between the plurality of banks. In each of the plurality of banks, the lateral width of the placement surface varies depending on positions along the longitudinal direction of the bank and the depth of the groove in proximity to a portion of the placement surface having a larger lateral width is shallower than the depth of the groove in proximity to a portion of the placement surface having a smaller lateral width.

In accordance with the first aspect of the present invention, enlarging the portion of each placement surface highly likely to be in contact with the food allows more heat to be conducted to the food from the placement surface, and a slope is formed in the groove.

A second aspect in accordance with the present invention provides a cooking device of the first aspect of the present invention, wherein the lateral width of the placement surface is largest in the vicinity of the longitudinal center of each of the plurality of banks. In accordance with the second aspect of the present invention, enlarging the portion of each placement surface highly likely to be in contact with the food allows more heat to be conducted to the food from the placement surface.

A third aspect in accordance with the present invention provides a cooking device of the second aspect of the present invention, wherein the depth of the groove is shallowest in proximity to the longitudinal center of the plurality of banks. In accordance with the third aspect of the present
invention, the portion of each placement surface highly likely to be in contact with the food is enlarged and a slope is formed in the groove. This allows more heat to be conducted to the food from the placement surface, and the grease oozing from the food to be discharged easily.

A fourth aspect in accordance with the present invention provides a cooking device of the first aspect of the present invention, wherein the lateral width of the placement surface is largest in the vicinity of the longitudinal center of each of the plurality of banks and the depth of the groove is shallowest in proximity to the longitudinal center of the plurality of banks. In accordance with the fourth aspect of the present invention, the portion of each placement surface highly likely to be in contact with the food is enlarged and a slope is formed in the groove. This allows more heat to be conducted to the food from the placement surface, and the grease oozing from the food to be discharged easily.

A fifth aspect in accordance with the present invention provides a heating device including a heating chamber, wherein the cooking device of the first aspect of the present invention is included therein. In accordance with the fifth aspect of the present invention, the performance of grill pan cooking in the heating device can be enhanced.

Hereinafter, a cooking device in accordance with the preferred embodiment of the present invention is detailed with reference to the accompanying drawings.

### FIRST EXEMPLARY EMBODIMENT

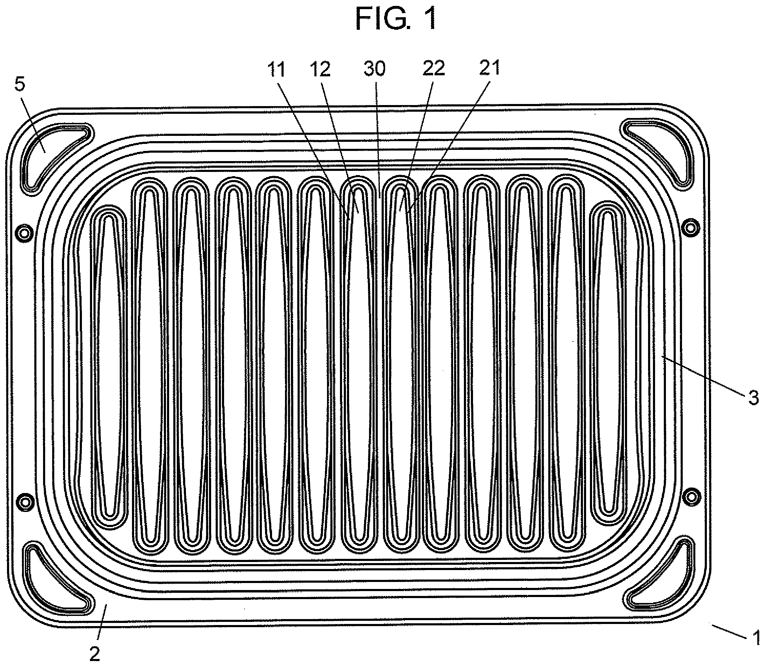

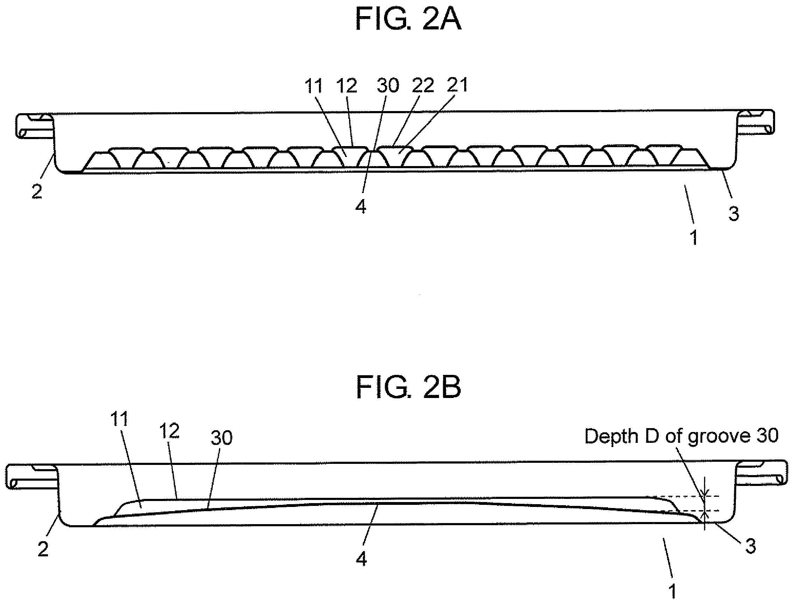

Figs. 1 through 3 are a top view, a side sectional view, and a perspective view, respectively, of a grill pan in accordance with the first exemplary embodiment of the present invention. More specifically, Fig. 2A is a sectional view of the grill pan as viewed from the longitudinal direction; Fig. 2B is a sectional view of the grill pan as viewed from the lateral direction.

As shown in Figs. 1 through 3, the grill pan of this exemplary embodiment has an overall substantially rectangular shape as viewed from the top. Edge 2 in a flange shape is formed on the periphery of the grill pan. Peripheral channel 3 is formed inside edge 2. A plurality of banks, each in the shape of an elongate, thin, rectangular parallelepiped having rounded corners, is arranged in the lateral direction inside peripheral channel 3. Between two banks adjacent to each other, a groove is formed. Each bank has a length equal to that from one side to the opposed side of peripheral channel 3. Thus, the inside part of peripheral channel 3 has a corrugated shape where banks and grooves are arranged alternately in the lateral direction. The bottom of peripheral channel 3 is lower than the bottom of groove 30.

Hereinafter, only banks 11 and 21 and groove 30 are focused. The top surfaces of banks 11 and 21 have respective placement surfaces 12 and 22 each in a substantially planar shape on which food is to be placed. Heating element 4, i.e. an electromagnetic wave absorption material predominantly composed of ferrite, is applied to the back surfaces of banks 11 and 21, and groove 30.

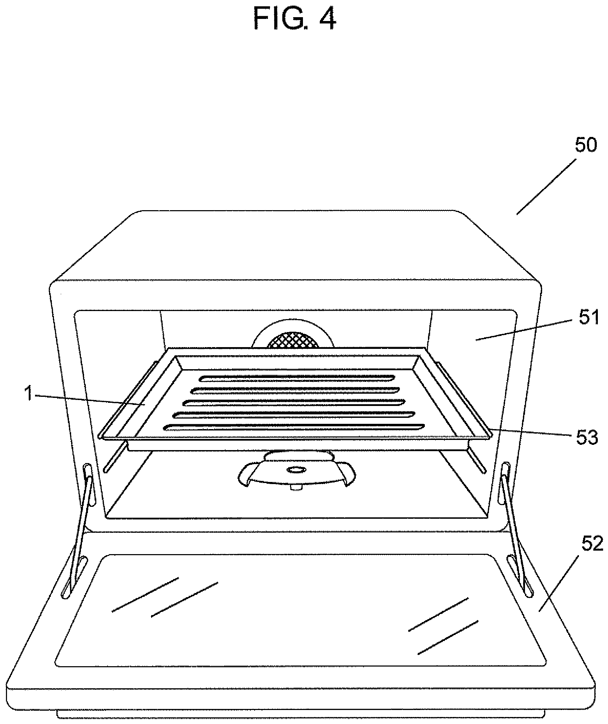

Fig. 4 is a general view of a heating device including the grill pan in accordance with the first exemplary embodiment of the present invention.
In this exemplary embodiment, as the heating device, a high-frequency heating device is described. As shown in Fig. 4, heating device 50 includes the following elements: heating chamber 51 for housing food; door 52 for blocking the front opening of heating chamber 51; a magnetron (not shown) for generating microwaves. Rails 53 are disposed on the right and left sidewalls of the interior of heating chamber 51. Edge 2 of grill pan 1 is placed on rails 53, so that grill pan 1 is disposed in a predetermined position inside heating chamber 51.

When grill pan 1 configured as above is disposed in the predetermined position inside heating chamber 51 and the back surface of grill pan 1 is irradiated with microwaves, heating element 4 generates heat and the heat conducted from placement surfaces 12 and 22 can cook the food. In grill pan 1 of this exemplary embodiment, the grease oozing from the food in cooking passes through groove 30 and accumulates in peripheral channel 3.

The operation having been described above is the same as that of the conventional grill pan. Hereinafter, the features of the grill pan of this exemplary embodiment are described. As shown in Fig. 1, the lateral widths of placement surfaces 12 and 22 on the top surfaces of banks 11 and 21 are largest in the vicinity of the longitudinal centers of banks 11 and 21, respectively, and are decreased toward the proximity to peripheral channel 3.

As shown in Fig. 2B, the distances between the bottom of groove 30 and placement surfaces 12 and 22 in the vertical direction, i.e. depth D of groove 30, are smallest in proximity to the vicinity of the longitudinal centers of respective banks 11 and 21, and are increased toward the proximity to peripheral channel 3. In other words, since placement surfaces 12 and 22 are each in a substantially planar shape, the bottom of groove 30 is highest in the vicinity of the longitudinal centers of banks 11 and 21 and is lowered toward the proximity to peripheral channel 3.

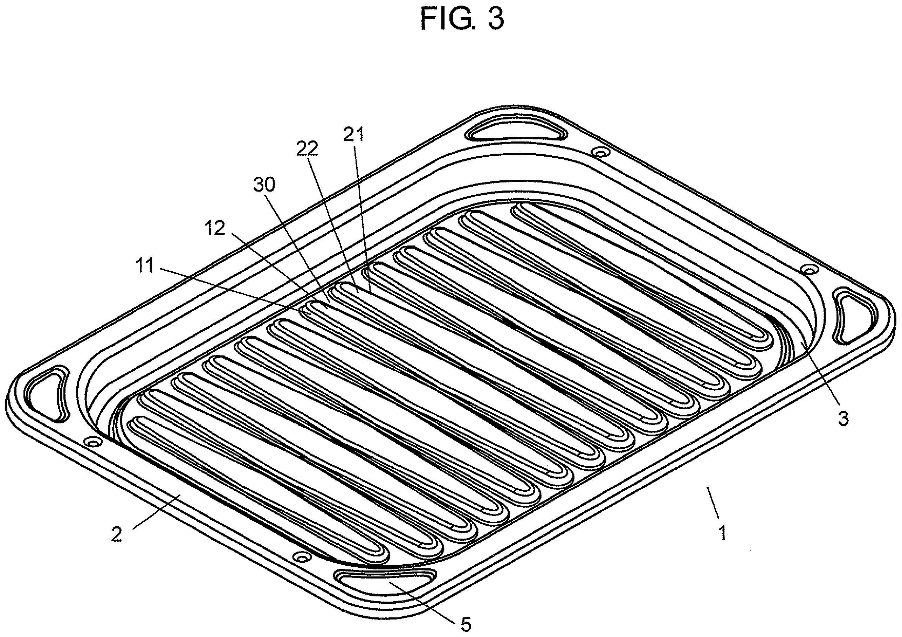

These features can provide the following advantages.
(1) Since the areas of placement surfaces 12 and 22 are larger in the vicinity of the center of grill pan 1 where food is highly likely to be placed, the contact area between the food and the placement surfaces can be increased.
(2) The depth of groove 30 increases in the direction from the vicinity of the center of grill pan 1 toward the proximity to peripheral channel 3. That is, in the vicinity of the center of grill pan 1, soft food can fall in groove 30 and make contact with the bottom of groove 30; in the positions nearer to peripheral channel 3, the food is less likely to make contact with the bottom of groove 30. Thus, the grease oozing out in cooking is led to peripheral channel 3 along the slope of groove 30.
   Therefore, this configuration can remove the grease that is accumulated between the food and the grooves and inhibits heat conduction, thereby giving a sufficient roast color even to fatty food.
(3) The depth of groove 30 is shallower in a portion having a smaller lateral width and is greater in a portion having a larger lateral width. Thus, grill pan 1 has a shape that allows easier cleaning than the conventional shape.
(4) With the above features, the slopes of the side surfaces of banks 11 and 21 from placement surfaces 12 and 22 to groove 30 have a substantially equal angle in every longitudinal portion of banks 11 and 21, respectively. No particular portion has a slope steeper than those of the other portions (see Fig. 3). Therefore, grill pan 1 of this exemplary embodiment can be formed by pressing easily.

The following consideration is given to the more specific configuration of grill pan 1 of this exemplary embodiment. Even when a food container having a relatively small lateral width (e.g. a coffee cup) is placed on the plurality of placement surfaces, the food container is always placed on at least two placement surfaces so as not to fall. Assuming that the average bottom diameter of such food containers is 48 mm, for example, the lateral width of the largest portion of the placement surface is set to 35 mm. It is also preferable to set depth D of groove 30 in the shallowest portion to 1.5 mm, and the average gradient of placement surfaces 12 and 22 from the longitudinal centers to 2° or greater. Further, when dents 5 are formed at the four corners of the flange portion on the periphery of edge 2 as shown in Figs. 1 and 3, the strength of grill pan 1 can be enhanced and the grill pan reaching high temperatures after cooking can be handled easily.

As described above, the cooking device of the present invention can provide a grill pan that has larger placement surfaces to be in contact with food and performs efficient degreasing, and enhance the performance of grill pan cooking in a high-frequency heating device. In this exemplary embodiment, placement surfaces 12 and 22 are substantially planar. A slight slope may be formed from the vicinity of the center toward groove 30 or peripheral channel 3 both in the longitudinal direction and the lateral direction. The structure of the placement surfaces is not limited to this exemplary embodiment.

In this exemplary embodiment, grill pan 1 is formed by pressing a metal plate. However, the present invention is not limited to pressing. For example, grill pan 1 can be cut out from a forged part.

### INDUSTRIAL APPLICABILITY

As detailed above, the cooking device of the present invention is applicable to high-frequency heating devices, such as a microwave oven. The cooking device of the present invention is also applicable to a cooking pan in a corrugated shape that is disposed in a griller using heating means other than high-frequency heating, such as a sheathed heater.

### REFERENCE MARKS IN THE DRAWINGS

- 1: Grill pan
- 2: Edge
- 3: Peripheral channel
- 4: Heating element
- 5: Dent
- 11, 21: Bank
- 12: Placement surface
- 22: Placement surface
- 30: Groove

## Claims

1. A cooking device for cooking food placed thereon, the cooking device being extended in a lateral direction and a longitudinal direction as viewed from the top comprising:
a plurality of banks (11, 21) arranged in the lateral direction, each of the banks (11, 21) having a placement surface (12, 22) for supporting the food being placed; and
a groove (30) formed between the plurality of banks (11, 21),
wherein, in each of the plurality of banks (11, 21), a lateral width of the placement surface varies depending on positions along the longitudinal direction of the bank,
wherein a heating element (4) is applied to the bank surfaces of the banks (11, 21) and the groove (30), and the heating element is an electromagnetic wave absorbing material configured to absorb microwaves,
**characterized in that**
the depth of the groove in proximity to a portion of the placement surface having a larger lateral width is shallower than the depth of the groove in proximity to a portion of the placement surface having a smaller lateral width.

2. The cooking device of claim 1, wherein the lateral width of the placement surface is largest in the vicinity of a longitudinal center of each of the plurality of banks.

3. The cooking device of claim 2, wherein the depth of the groove is shallowest in proximity to the longitudinal center of the plurality of banks.

4. The cooking device of claim 1, wherein the lateral width of the placement surface is largest in the vicinity of a longitudinal center of each of the plurality of banks and the depth of the groove is shallowest in proximity to the longitudinal center of the plurality of banks.

5. A heating device, comprising a heating chamber, wherein the cooking deviceof claim 1 is included in the heating chamber.

## Patentansprüche

1. Kochvorrichtung zum Kochen bzw. Zubereiten von Lebensmitteln, die darauf platziert bzw. untergebracht sind, wobei die Kochvorrichtung in einer lateralen bzw. seitlichen Richtung und in einer Längsrichtung erstreckt ist, wie dies von oben betrachtet wird, aufweisend:
eine Mehrzahl von Dämmen bzw. Überhöhungen (11, 21), die in der lateralen bzw. seitlichen Richtung angeordnet sind, wobei jeder bzw. jede von den Dämmen bzw. Überhöhungen (11, 21) eine Platzierungs- bzw. Unterbringungsoberfläche (12, 22) zum Tragen bzw. Lagern der Lebensmittel hat, die platziert bzw. untergebracht sind; und
eine Rinne bzw. Furche (30), die zwischen der Mehrzahl von Dämmen bzw. Überhöhungen (11, 21) gebildet ist,
wobei in jedem bzw. jeder von der Mehrzahl von Dämmen bzw. Überhöhungen (11, 21) eine laterale bzw. seitliche Breite von der Platzierungs- bzw. Unterbringungsoberfläche variiert, und zwar abhängig von Positionen entlang der Längsrichtung von dem Damm bzw. der Überhöhung,
wobei ein Heizelement (4) an den Damm- bzw. Überhöhungsoberflächen von den Dämmen bzw. Überhöhungen (11, 21) und der Rinne bzw. Furche (30) angebracht bzw. angewendet ist, und wobei das Heizelement ein elektromagnetische Wellen absorbierendes Material ist, das konfiguriert ist, um Mikrowellen zu absorbieren, **dadurch gekennzeichnet, dass**
die Tiefe von der Rinne bzw. Furche in der Nähe zu einem Abschnitt von der Platzierungs- bzw. Unterbringungsoberfläche, die eine größere laterale bzw. seitliche Breite hat, flacher als die Tiefe von der Rinne bzw. Furche in der Nähe zu einem Abschnitt von der Platzierungs- bzw. Unterbringungsoberfläche ist, die eine kleinere laterale bzw. seitliche Breite hat.

2. Kochvorrichtung von Anspruch 1, wobei die laterale bzw. seitliche Breite von der Platzierungs- bzw. Unterbringungsoberfläche am größten in der Nähe bzw. Nachbarschaft von einem Zentrum bzw. einer Mitte der Länge nach von jedem bzw. jeder von der Mehrzahl von Dämmen bzw. Überhöhungen ist.

3. Kochvorrichtung von Anspruch 2, wobei die Tiefe von der Rinne bzw. Furche am flachsten in der Nähe von dem Zentrum bzw. der Mitte der Länge nach von der Mehrzahl von Dämmen bzw. Überhöhungen ist.

4. Kochvorrichtung von Anspruch 1, wobei die laterale bzw. seitliche Breite von der Platzierungs- bzw. Unterbringungsoberfläche am größten in der Nähe bzw. Nachbarschaft von einem Zentrum bzw. einer Mitte der Länge nach von jedem bzw. jeder von der Mehrzahl von Dämmen bzw. Überhöhungen ist und die Tiefe von der Rinne bzw. Furche am flachsten in der Nähe von dem Zentrum bzw. der Mitte der Länge nach von der Mehrzahl von Dämmen bzw. Überhöhungen ist.

5. Heizvorrichtung, die eine Heizkammer aufweist, wobei die Kochvorrichtung von Anspruch 1 in der Heizkammer enthalten ist.

## Revendications

1. Dispositif de cuisson pour cuire un aliment placé sur celui-ci, le dispositif de cuisson s'étendant, dans une vue d'en haut, dans une direction latérale et dans une direction longitudinale, comportant :
une pluralité de monticules (11, 21) agencés dans la direction latérale, chacun des monticules (11, 21) comprenant une surface de placement (12, 22) pour porter l'aliment qui y est placé ; et
une rainure (30) formée entre la pluralité de monticules (11, 21), où, pour chaque pluralité de monticules (11, 21), une largeur latérale de la surface de placement varie selon des emplacements le long de la direction longitudinale du monticule,
où un élément de chauffage (4) est appliqué aux surfaces de monticule des monticules (11, 21) et à la rainure (30), et l'élément de chauffage est un matériau absorbant les ondes électromagnétiques, conçu pour absorber des micro-ondes,
**caractérisé en ce que**
la profondeur de la rainure à proximité d'une partie de la surface de placement ayant une largeur latérale plus grande est moins profonde que la profondeur de la rainure à proximité d'une partie de la surface de placement ayant une largeur latérale plus petite.

2. Dispositif de cuisson selon la revendication 1, où la largeur latérale de la surface de placement est la plus large à proximité d'un centre longitudinal de chacun de la pluralité de monticules.

3. Dispositif de cuisson selon la revendication 2, où la profondeur de la rainure est la moins profonde à proximité du centre longitudinal de la pluralité de monticules.

4. Dispositif de cuisson selon la revendication 1, où la largeur latérale de la surface de placement est la plus large à proximité d'un centre longitudinal de chacun de la pluralité de monticules et la profondeur de la rainure est la moins profonde à proximité du centre longitudinal de la pluralité de monticules.

5. Dispositif de chauffage comportant une chambre de chauffage, où le dispositif de cuisson selon la revendication 1 est inclus dans la chambre de cuisson.
